# EUROPEAN PATENT SPECIFICATION

(11) **EP 3 670 140 B1**
(45) Date of publication and mention of the grant of the patent: **09.11.2022**
(21) Application number: 19217302.9
(22) Date of filing: 18.12.2019
(51) Int. Cl.: B29C 48/30, B29D 30/60, B29C 48/305, B29C 48/21, B29C 48/49, B29C 48/00, B29C 48/07, B29D 30/62, B29D 30/52, B29C 48/25, B29K 21/00, B29L 30/00

(54) **COMPOSITE TREAD WITH STIFFNESS GRADIENT AND METHOD OF MAKING**
VERBUNDLAUFFLÄCHE MIT STEIFIGKEITSGRADIENTEN UND VERFAHREN ZUR HERSTELLUNG
BANDE DE ROULEMENT COMPOSITE DOTÉE D'UN GRADIENT DE RIGIDITÉ ET SON PROCÉDÉ DE FABRICATION

(30) Priority: 19.12.2018 US 201862781807 P; 08.10.2019 US 201916595928
(43) Date of publication of application: 24.06.2020
(73) Proprietor: The Goodyear Tire & Rubber Company, Akron, OH 44316 (US)
(72) Inventor: CHEN, Hongbing, Broadview Heights OH 44147 (US); DYRLUND, Christopher David, Canton OH 44705 (US); BALDAN, Adam Mark, Akron OH 44303 (US); ROGENSKI, Elizabeth Amelia, Atwater OH 44201 (US)
(74) Representative: Kutsch, Bernd

(56) References cited:
- EP-A1- 2 338 661
- EP-A1- 2 468 476
- JP-A- 2012 131 280
- JP-B2- 4 956 070
- US-A1- 2009 320 985
- US-A1- 2013 075 017
- US-A1- 2015 090 381

## Description

### Field of the Invention

The invention relates in general to tire manufacturing, and more particularly to a method for forming a composite tread and a tire with a targeted stiffness gradient.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available, due to the extensive costs associated with each compound. Each compound typically requires the use of a banbury mixer, which involves expensive capital expenditures. Furthermore, Banbury mixers have difficulties mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus, it is desired to have an improved method and apparatus which provides independent flow of two or more compounds from a single application head. More particularly, it is desired to be able to make a custom tire tread directly onto a tire building machine in an efficient manner, reducing the need for multiple stations.

US 2009/320 985 A1, US 2015/090381 A1, US 2013/075017 A1, EP 2 486 476 A1, JP 4 956 070 B2 and EP 2 338 661 A1 each describe a method in accordance with the preamble of claim 1. US 2009/320 985 A1 describes a tire in accordance with the preamble of claim 9.

JP 2012 131 280 A shows a tire having a conductive part buried in the tread rubber.

### Summary of the Invention

The invention relates to a method in accordance with claim 1 and to a tire in accordance with claim 9.

Dependent claims refer to preferred embodiments of the invention.

In accordance with the invention, a method for forming a composite tread for a tire is disclosed. The method comprises the steps of: forming a coextruded strip of a first and second rubber compound, wherein the first rubber compound is a tread rubber compound and the second rubber compound is different from the first rubber compound; and forming the tread from winding the coextruded strip onto a tire building drum or a green tire carcass while varying the ratio of the first compound to the second compound in the coextruded strip.

Preferably, the tread has two tread lateral edges wherein at least one or both of the lateral edges of the tread are 90% to 100% of the first rubber compound.

In a preferred aspect of the invention, the method comprises the steps of forming a tread rib while continuously or stepwise varying the ratio of the first rubber compound to the second rubber compound in the coextruded strip.

Preferably, the tread has two lateral tread edges and one or more tread blocks or tread ribs, wherein at least one or both of the lateral edges of the tread are 90% to 100% of the first rubber compound and 0% to 10% of the second rubber compound and/or wherein at least one or all of the tread blocks or tread ribs are 90% to 100% of the first rubber compound and 10% to 0% of the second rubber compound.

Preferably, the ratio of the first compound to the second compound in the coextruded strip is varied by changing the ratio of the speed of a first gear pump to a second gear pump.

In a preferred aspect of the invention, the coextruded strip is formed in a continuous manner and/or the coextruded strip is applied in a continuous manner to the tire building drum or the green tire carcass.

Preferably, the tread has one or more tread grooves, wherein the walls and/or the bottoms of at least one of the tread grooves, preferably of all of the tread grooves, are formed from a layer of at least 90% or of 100% of the second rubber compound.

In another aspect of the invention, a tire having a tread is disclosed. The tread is formed from a preferably continuous spiral winding of a coextruded dual layer strip of a first and second rubber compound, wherein the first rubber compound is a tread rubber compound preferably comprising silica and wherein the second rubber compound is different from the first rubber compound, wherein the tread has a first lateral edge formed from spirally winding said coextruded dual layer strip having 90% to 100%, preferably 90% to 99%, of the first rubber compound and 0% to 10%, preferably 1% to 10%, of the second rubber compound, and wherein the tread has a second lateral edge formed from spirally winding said coextruded dual layer strip having 30% to 70%, preferably 40% to 60%, of the first rubber compound and 70% to 30%, preferably 60% to 40%, of the second rubber compound.

Preferably, the tread has a first rib or a first tread block formed of 90% to 100% of the first rubber compound, and a second rib or a second tread block formed of a gradient of the first rubber compound to the second rubber compound or comprising a gradient of the first rubber compound to the second rubber compound when moving axially across the second rib or a second tread block.

In a preferred aspect of the invention, the coextruded dual layer strip of the first and second rubber compound consists of a first layer of the first rubber compound and a second layer of the second rubber compound. Preferably, the second layer has a gauge or thickness thinner than the gauge or thickness of the first layer. More preferably, the gauge or thickness of the second layer is 3-30 times thinner or 5 to 15 times thinner than the gauge or thickness of the first layer.

In a preferred aspect of the invention, the coextruded dual layer strip has a rectangular cross-sectional shape or a trapezoidal cross-sectional shape or an elliptical cross-sectional shape.

In yet another preferred aspect of the invention, a tire having a tread is disclosed. The tread is formed from a preferably continuous spiral winding of a coextruded dual layer strip of a first and second rubber compound, wherein the second rubber compound is different from the first rubber compound, and wherein a portion of the tread has a gradient of the first rubber compound to the second rubber compound.

In a preferred aspect of the invention, the gradient is formed by gradually or continuously changing or increasing the ratio of the second compound to the first compound in the coextruded dual layer strip, preferably when moving axially across the tread from one lateral tread end to the other lateral tread end.

Preferably, the tread has a first lateral edge formed from spirally winding the coextruded dual layer strip having 90% to 100%, preferably 90% to 99%, of the first rubber compound and 0% to 10%, preferably 1% to 10%, of the second rubber compound, and wherein the tread has one or more tread blocks or tread ribs formed from spirally winding the coextruded dual layer strip having 30% to 70%, preferably 40% to 90%, of the first rubber compound and 70% to 30%, preferably 60% to 40%, of the second rubber compound.

In a preferred aspect of the invention, the coextruded dual layer strip forming the tread is aligned with the radial direction of the tire.

In another preferred aspect of the invention, the windings of the coextruded dual layer strip forming the tread overlap with each other and/or are applied at an angle in the range of from 30 to 45 degrees.

Preferably, the second rubber compound has a storage modulus G', when measured at 1% strain and 100ºC according to ASTM D5289, in a range of from 15 to 60 MPa, more preferably in a range of from 30 MPa to 40 MPa, 40 MPa to 60 MPa, 23 to 50 MPa, 25 to 40 MPa or 23 to 31 MPa.

In a preferred aspect of the invention, the storage modulus G', when measured at 1% strain and 100ºC according to ASTM D5289, of the second rubber compound is at least 5 MPa, preferably at least 10 MPa or at least 20 MPa higher than the respective storage modulus G' or the first rubber composition.

In a preferred aspect of the invention, the wear of the second rubber compound when measured in accordance with ASTM D5963-2015 is at least 20%, preferably at least 40%, higher than the wear of the first rubber compound.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency such as 1 Hz and a fixed temperature such as 100ºC.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1A is a cross-sectional view of a green (uncured) tread formed from two layers of strip lamination of a coextruded strip;
FIG. 1B is a detail of Fig. 1A;
Fig. 1C is a picture of a green (uncured) tread formed from two layers of strip lamination of a coextruded strip as shown in Fig. 1A;
FIG. 2A is a perspective view of a coextruded strip of 90% of a first compound and 10% of a second compound of the present invention;
FIG. 2B is a perspective view of a coextruded strip of 95% of a first compound and 5% of a second compound;
FIG. 3A is a cross-sectional view of a desired tire tread profile;
FIG. 3B is a close-up view of the tire tread profile formed from coextruded strip;
FIG. 4A is a cross-sectional view of a green (uncured) tread formed from a single layer of strip lamination of a coextruded strip;
FIG. 4B is a detail of Fig. 4A;
Fig. 4C is a picture of a green (uncured) tread formed from two layers of strip lamination of a coextruded strip as shown in Fig. 4A;
FIG. 5 is a close-up cross-sectional view of a dual compound apparatus for forming a coextruded strip onto a tire building drum; and
FIG. 6A is a perspective cutaway view of a coextrusion nozzle of the present invention, while
FIG. 6B is a side cross-sectional view of the coextrusion nozzle of FIG. 6A.

### Detailed Description of Example Embodiments of the Invention

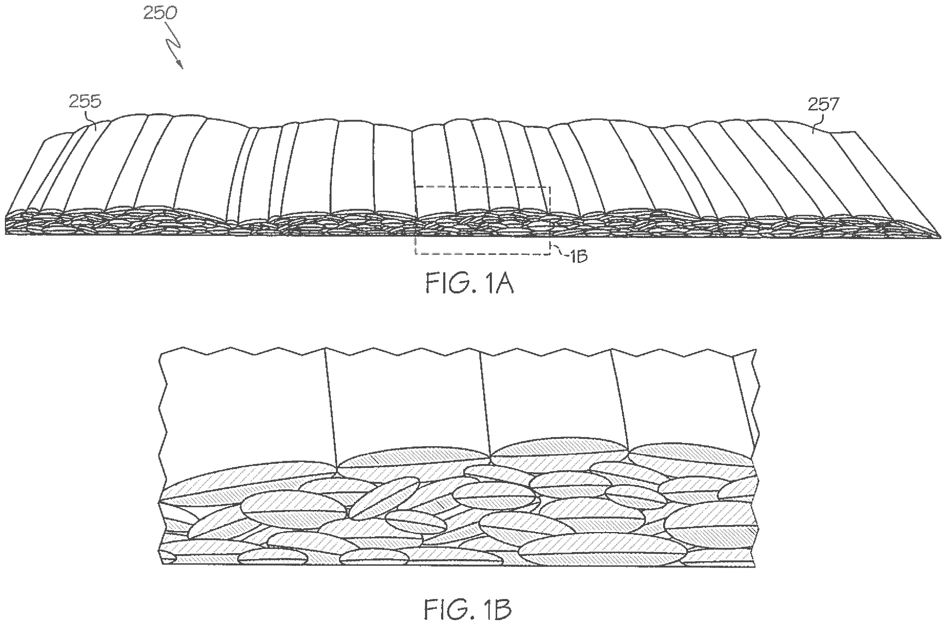

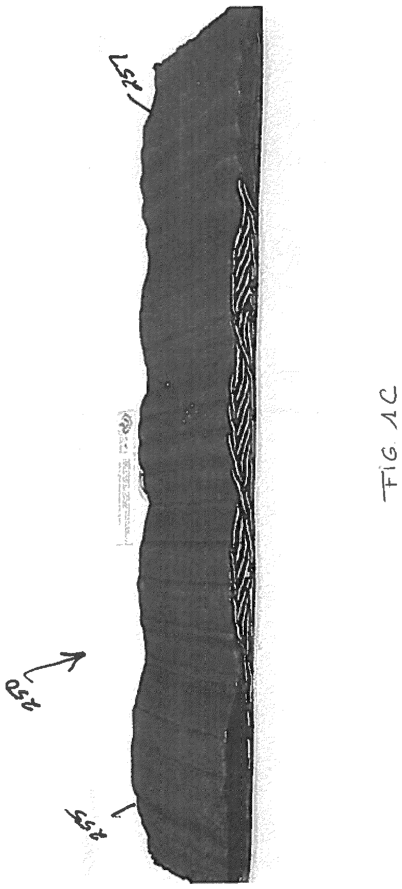

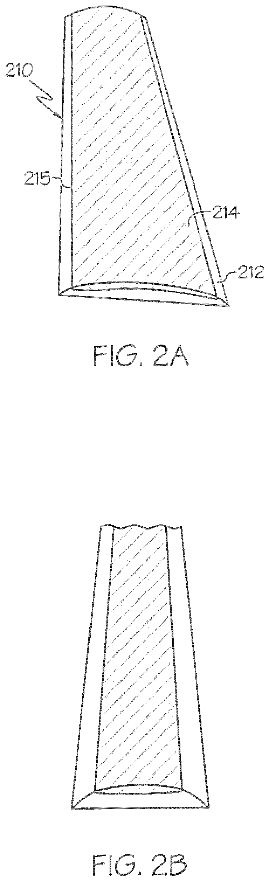

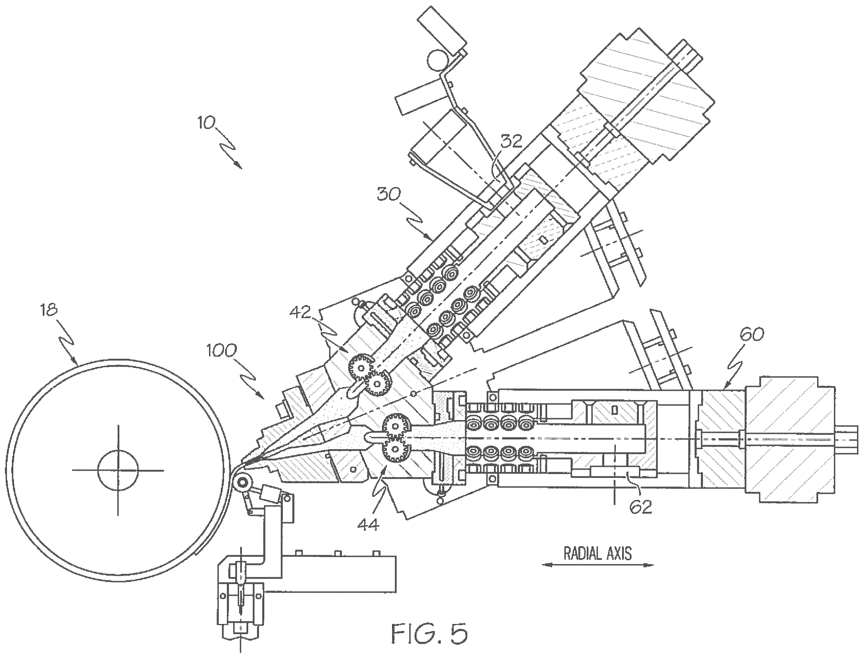

FIG. 1A illustrates a cross-sectional view of tire tread 250 of the present invention. The tire tread 250 is formed by strip lamination, or by winding a continuous coextruded strip 210 of a first and second layer of two different compounds, wherein the strip is applied directly onto a tire building drum 18 (as shown in FIG. 5) or a shaped green carcass. The continuous strip 210 is shown in FIG. 2A and is a dual layer or coextruded strip of a first layer 212 and second layer 214 formed of two different rubber tread compounds. The first layer 212 is formed from a first rubber compound which can be any mono cap tread compound, typically a full silica compound. The second compound is preferably a stiff rubber compound or any compound selected for desired properties different from the first compound.

The apparatus used to form the continuous coextruded strip is described in the paragraphs below and is shown in FIGS. 5-6. The apparatus can form the coextruded strip while instantaneously varying the ratio of the first compound to the second compound.

The coextruded strip forming apparatus 10 is used to form the tread shown in FIG. 1A by rotating the drum 18 (or carcass) and then applying a continuous coextruded strip by spirally winding the strip onto the drum 18 or carcass. As shown, the strips are layered in the first row by overlapping the strips with each other. At the lateral ends, 255, 257 the strip is preferably 100% of the first compound. Between the lateral ends 255, 257 the coextruded strip composition is preferably in the range of from 80% to 90% first compound, and 10% to 20% of a second compound. There are typically two rows of strips to form the tread. However, the coextruded strip composition may vary and be in the range of from 10% to 100% of the first compound, and 90% to 10% of the second compound. The coextruded strip composition may be changed almost instantaneously during application to the tire building drum due to the short residence time of the nozzle.

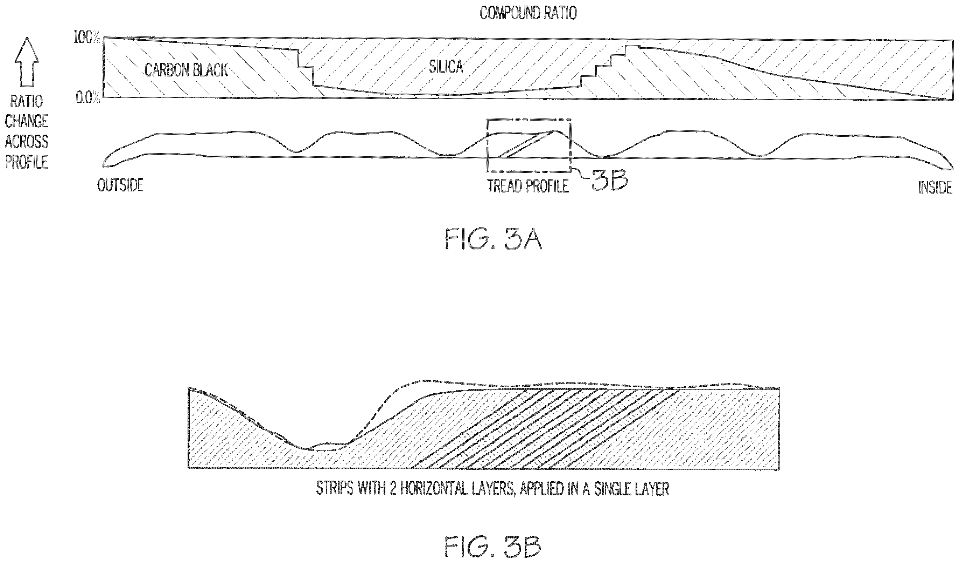

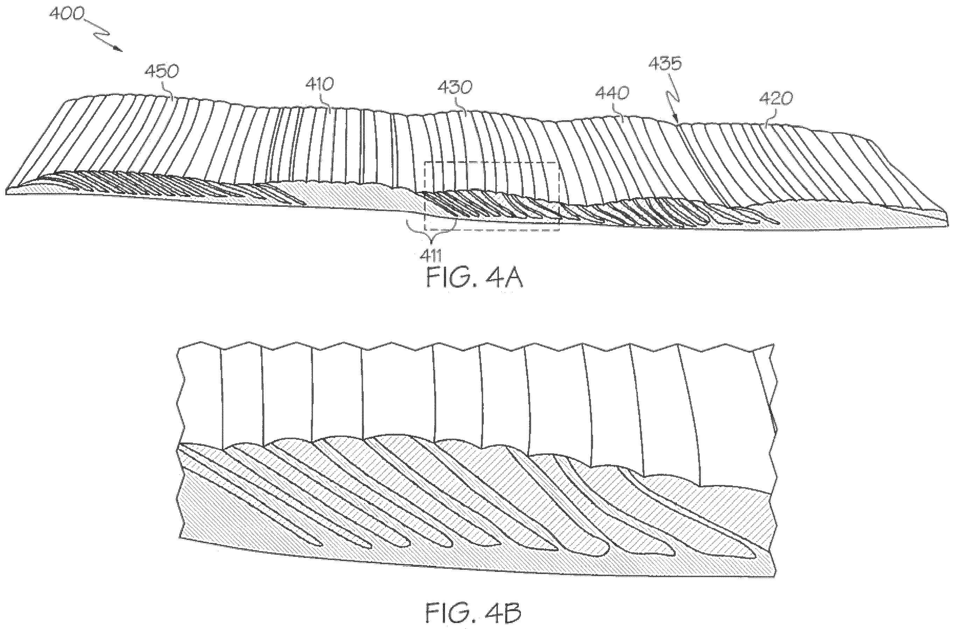

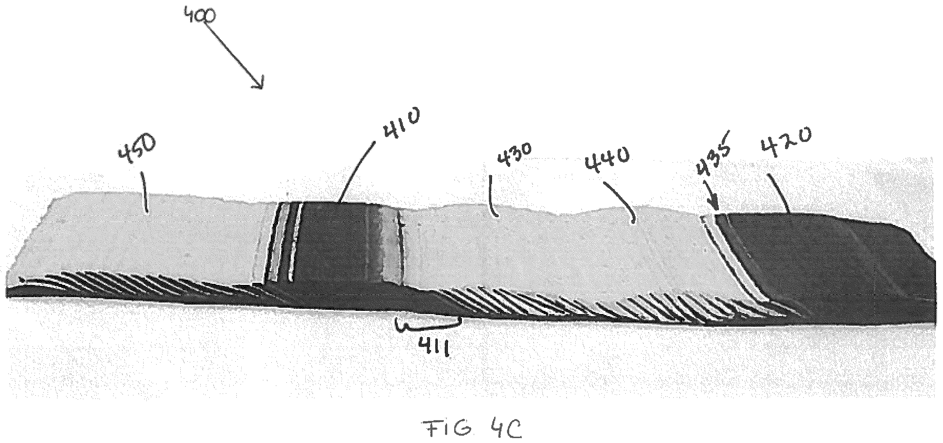

FIGS. 3A, 3B, and FIGS. 4A and Fig. 4B illustrate a second embodiment of a green tire tread 400 that is formed from a single layer of coextruded strips. The first compound is selected to be a high silica tread compound, while the second compound represented, is selected to have a desired property, in this case stiffness, but could also be other properties such as wet grip.

As shown, the coextruded strips have different tread compound ratios that vary axially across the tread profile. The outer lateral edge 420 is formed of a coextruded strip having in a range of 90% to 100% of the first compound. The ribs or tread blocks 430 and 440 are formed in the range of 70% to 90% of the second compound and 10% to 30% of the first. The tread has a transition section 435 located between the outer lateral edge 420 and the rib 440. In the transition section 435, the second compound gradually increases. The rib or tread block 410 is primarily 90% to 100% of the first tread compound and has a transition section 411 that increases the first tread compound from the rib 430 to the rib 410. The other lateral edge 450 is formed of a coextruded strip of preferably 50% first rubber compound to 50% second rubber compound. Thus, each tread block or rib area has a stiffness gradient that varies axially across the tread block or rib. The strips are preferably angled and arranged in a single layer.

The second compound is preferably a high wear rubber compound, preferably a compound having a very high G' stiffness. The combination of the tread compound made with silica and the second compound of very high stiffness results in a tire tread with the desired wet performance and low rolling resistance, while providing desired stiffness in the designated areas of the tread.

The stiffness is characterized by the storage modulus G', which are sometimes referred to as the "shear storage modulus" or "dynamic modulus". Reference may be made to Science and Technology of Rubber, second edition, 1994, Academic Press, San Diego, Calif., edited by James E. Mark et al, pages 249-254.

The shear storage modulus (G') values are indicative of rubber compound stiffness which can relate to tire performance.

In this application, G' is measured at 1% strain, 1 Hz and 100ºC according to ASTM D5289.

In this application, tread wear is measured in accordance with ASTM D5963 (2015) or equivalent with a force of 10 Newtons being applied.

The dynamic storage modulus (G') and also the dynamic loss modulus (G") are measurements of the viscoelastic properties of rubber compounds and may be obtained using a Rubber Process Analyzer as RPA 2000^{™} from the Alpha Technologies. For example, using the RPA 2000^{™}, a measurement at 100°C, at 1 Hz and at 1% strain is made.

In a first embodiment, the second rubber compound comprises a stiff rubber composition having a shear storage modulus G' measured at 1% strain and 100ºC according to ASTM D5289 ranging from 15 to 50 MPa.

In a more preferred embodiment, the second rubber compound comprises a rubber composition having a shear storage modulus G' measured at 1% strain and 100ºC according to ASTM D5289 ranging from 25 to 40 MPa.

In the most preferred embodiment, the second rubber compound comprises a rubber composition having a shear storage modulus G' measured at 1% strain and 100ºC according to ASTM D5289 ranging from 30 to 40 MPa.

### Coextruded Strip Forming Apparatus

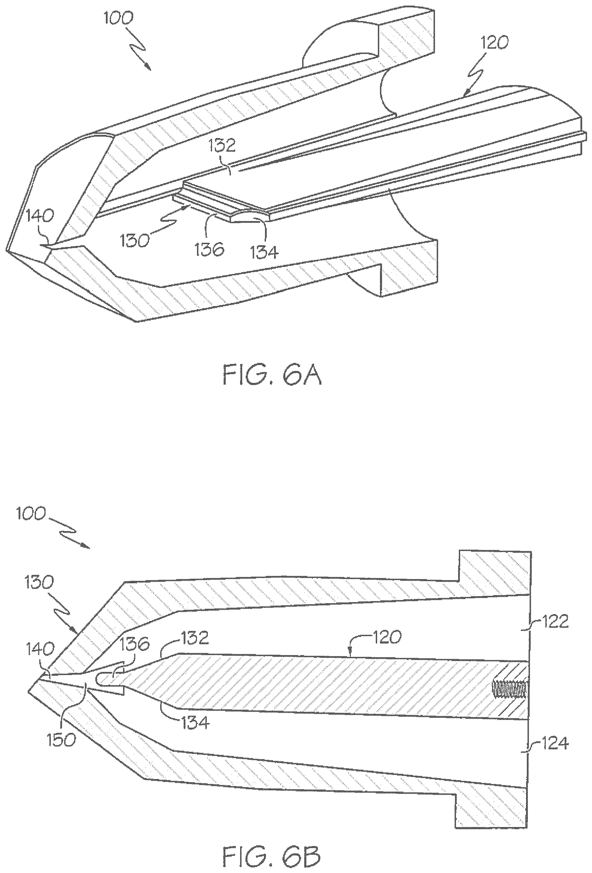

As shown in FIG. 5, FIG. 6A and FIG. 6B, the coextruded strip forming apparatus 10 includes a first extruder 30 and a second extruder 60, preferably arranged vertically in close proximity. The first extruder 30 has an inlet 32 for receiving a first rubber composition A, while the second extruder 60 has an inlet 62 for receiving a second rubber composition B. Each extruder functions to warm up the rubber composition to the temperature in the range of 80°C to 150°C, preferably 90°C to 120°C, and to masticate the rubber composition as needed. The coextruded strip forming apparatus 10 is mounted so that it can translate fore and aft in relation to a tire building drum 18.

Compound A is extruded by the first extruder 30 and then pumped by the first gear pump 42 into a nozzle 100, while at the same time Compound B is extruded by the second extruder 60 and then pumped by the second gear pump 44 into the coextrusion nozzle 100.

The coextrusion nozzle 100 has a removable insert 120 that functions to divide the nozzle into a first and second flow passageway 122, 124. The removable insert 120 is preferably rectangular in cross-sectional shape. The removable insert 120 has a distal end 130 with tapered ends 132, 134 forming a nose 136. The nose 136 is positioned adjacent the nozzle die exit 140 and spaced a few millimeters from the die exit 140. The region between the nose 136 and the die exit 140 is a low volume coextrusion zone 150 that is high pressure. In the low volume coextrusion zone 150, compound A flowstream 122 merges with compound B flowstream 124 forming two discrete layers 212, 214 joined together at an interface 215.

The volume ratio of compound A to compound B may be changed by varying the ratio of the speed of gear pump of compound A to the speed of gear pump of compound B. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

The extruded first layer thickness of the first compound is preferably in the range of from 0.3 mm to 2 mm, and more preferably in the range of from 0.6 to 1.2 mm.

The extruded second layer thickness of the second compound preferably has a thickness in the range of from 0.01 mm to 0.2 mm, more preferably 0.01 mm to 0.1 mm.

The overall width of the coextruded strip 210 is preferably in the range of from 10 mm to 50 mm, more preferably 20 to 40 mm.

The methods and equipment used to form a coextruded strip of two different compounds can be used to create a composite tread structure with a ratio of reinforcement compound that may vary as desired. In one example, the desired property such as stiffness may be varied across a tread block or rib to create a stiffness gradient. The dual compound applier has the ability to put a stiffer compound in targeted or desired areas to provide extra stiffness where it is most effective without replacing large amounts of the main compound and comprising rolling resistance. This type of distribution would be impossible with a conventional extruder.

## Claims

1. A method for forming a composite tread for a tire, the method comprising the steps of:
forming a coextruded strip (210) of a first and second rubber compound, wherein the first rubber compound is a tread rubber compound and the second rubber compound is different from the first rubber compound; and
forming the tread (250) from winding the coextruded strip (210) onto a tire building drum (18) or a green tire carcass while varying the ratio of the first compound to the second compound in the coextruded strip (210),
**characterized in that** the second rubber compound has a storage modulus G' when measured at 1% strain and 100°C according to ASTM D5289 in a range of from 15 to 60 MPa and **in that** said storage modulus G' when measured at 1% strain and 100°C according to ASTM D5289 of the second rubber compound is at least 5 MPa higher than the respective storage modulus G' of the first rubber composition.

2. The method of claim 1 wherein the wear of the second rubber compound when measured in accordance with ASTM D5963-2015 is at least 20% higher than the wear of the first rubber compound.

3. The method of claim 1 wherein the wear of the second rubber compound when measured in accordance with ASTM D5963-2015 is at least 40% higher than the wear of the first rubber compound.

4. The method of claim 1 wherein the second rubber compound has a storage modulus G' when measured at 1% strain and 100°C according to ASTM D5289 in a range of from 23 to 50 MPa and in that said storage modulus G' when measured at 1% strain and 100°C according to ASTM D5289 of the second rubber compound is at least 10 MPa higher than the respective storage modulus G' of the first rubber composition.

5. The method of claim 1 wherein the tread (250) has two tread lateral edges (255, 257) and wherein at least one or both of the lateral edges (255, 257) of the tread (250) are 90% to 100% of the first rubber compound.

6. The method of at least one the previous claims wherein the tread (250) has two lateral tread edges (255, 257) and one or more tread blocks or tread ribs (410), wherein at least one or both of the lateral edges (255, 257) of the tread (250) are 90% to 100% of the first rubber compound and 0% to 10% of the second rubber compound and/or wherein at least one or all of the tread blocks or tread ribs (410) are 90% to 100% of the first rubber compound and 10% to 0% of the second rubber compound.

7. The method of at least one of the previous claims wherein the ratio of the first compound to the second compound in the coextruded strip (210) is varied by changing the ratio of the speed of a first gear pump (42) to a second gear pump (44).

8. The method of at least one of the previous claims wherein the tread (250) has one or more tread grooves, wherein the walls and/or the bottoms of at least one of the tread grooves, preferably of all of the tread grooves, are formed from a layer of at least 90% or of 100% of the second rubber compound.

9. A tire having a tread, wherein the tread (250) is formed from a preferably continuous spiral winding of a coextruded dual layer strip (210) of a first and second rubber compound, wherein the first rubber compound is a tread rubber compound preferably comprising silica and wherein the second rubber compound is different from the first rubber compound, wherein the tread (250) has a first lateral edge (255) formed from spirally winding said coextruded dual layer strip (210) having 90% to 100%, preferably 90% to 99%, of the first rubber compound and 0% to 10%, preferably 1% to 10%, of the second rubber compound, and wherein the tread (250) has a second lateral edge (257) formed from spirally winding said coextruded dual layer strip (210) having 30% to 70%, preferably 40% to 60%, of the first rubber compound and 70% to 30%, preferably 60% to 40%, of the second rubber compound, **characterized in that** the second rubber compound has a storage modulus G' when measured at 1% strain and 100°C according to ASTM D5289 in a range of from 15 to 60 MPa and **in that** said storage modulus G' when measured at 1% strain and 100°C according to ASTM D5289 of the second rubber compound is at least 5 MPa higher than the respective storage modulus G' of the first rubber composition.

10. The tire of claim 9 wherein the wear of the second rubber compound when measured in accordance with ASTM D5963-2015 is at least 20% higher than the wear of the first rubber compound.

11. The tire of claim 9 wherein the wear of the second rubber compound when measured in accordance with ASTM D5963-2015 is at least 40% higher than the wear of the first rubber compound.

12. The tire of claim 9 wherein the second rubber compound has a storage modulus G' when measured at 1% strain and 100°C according to ASTM D5289 in a range of from 23 to 50 MPa and in that said storage modulus G' when measured at 1% strain and 100°C according to ASTM D5289 of the second rubber compound is at least 10 MPa higher than the respective storage modulus G' of the first rubber composition.

13. The tire of claim 9 wherein the tread (250) has a first rib or a first tread block (410, 430, 440) formed of 90% to 100% of the first rubber compound, and a second rib or a second tread block (410, 430, 440) formed of a gradient of the first rubber compound to the second rubber compound or comprising a gradient of the first rubber compound to the second rubber compound when moving axially across the second rib or a second tread block (410, 430, 440).

14. The tire of at least one of the claims 9 to 13 wherein the coextruded dual layer strip (210) of the first and second rubber compound consists of a first layer (212) of the first rubber compound and a second layer (214) of the second rubber compound, and wherein the second layer (214) has a gauge or thickness thinner than the gauge or thickness of the first layer (212).

15. The tire of at least one of the claims 9 to 14 wherein coextruded dual layer strip (210) has a rectangular cross-sectional shape or a trapezoidal cross-sectional shape or an elliptical cross-sectional shape.

## Patentansprüche

1. Verfahren zum Ausbilden einer zusammengesetzten Lauffläche für einen Reifen, das Verfahren umfassend die Schritte zum:
Ausbilden eines gemeinsam koextrudierten Streifens (210) aus einer ersten und einer zweiten Kautschukverbindung, wobei die erste Kautschukverbindung eine Laufflächenkautschukverbindung ist und die zweite Kautschukverbindung sich von der ersten Kautschukverbindung unterscheidet; und
Ausbilden der Lauffläche (250) durch Wickeln des koextrudierten Streifens (210) auf eine Reifenaufbautrommel (18) oder eine Reifenrohlingkarkasse, während das Verhältnis der ersten Verbindung zu der zweiten Verbindung in dem koextrudierten Streifen (210) variiert wird,
**dadurch gekennzeichnet, dass** die zweite Kautschukverbindung einen Speichermodul G' aufweist, der, wenn er bei 1 % Dehnung und 100 °C gemäß ASTM D5289 in einem Bereich von 15 bis 60 MPa gemessen wird, und dass der Speichermodul G', wenn er bei 1 % Dehnung und 100 °C gemäß ASTM D5289 der zweiten Kautschukverbindung gemessen wird, mindestens 5 MPa höher als der jeweilige Speichermodul G' der ersten Kautschukverbindung ist.

2. Verfahren nach Anspruch 1, wobei die Abnutzung der zweiten Kautschukverbindung, wenn sie gemäß ASTM D5963-2015 gemessen wird, mindestens 20 % höher als die Abnutzung der ersten Kautschukverbindung ist.

3. Verfahren nach Anspruch 1, wobei die Abnutzung der zweiten Kautschukverbindung, wenn sie gemäß ASTM D5963-2015 gemessen wird, mindestens 40 % höher als die Abnutzung der ersten Kautschukverbindung ist.

4. Verfahren nach Anspruch 1, wobei die zweite Kautschukverbindung einen Speichermodul G' aufweist, der, wenn er bei 1 % Dehnung und 100°C gemäß ASTM D5289 in einem Bereich von 23 bis 50 MPa gemessen wird, und dass der Speichermodul G', wenn er bei 1 % Dehnung und 100 °C gemäß ASTM D5289 der zweiten Kautschukverbindung gemessen wird, mindestens 10 MPa höher als der jeweilige Speichermodul G' der ersten Kautschukverbindung ist.

5. Verfahren nach Anspruch 1, wobei die Lauffläche (250) zwei Laufflächenseitenkanten (255, 257) aufweist und wobei mindestens eine oder beide der Seitenkanten (255, 257) der Lauffläche (250) zu 90 % bis 100 % die erste Kautschukverbindung sind.

6. Verfahren nach mindestens einem der vorstehenden Ansprüche, wobei die Lauffläche (250) zwei Seitenlaufflächenkanten (255, 257) und einen oder mehrere Laufflächenblöcke oder Laufflächenrippen (410) aufweist, wobei mindestens eine oder beide der Seitenkanten (255, 257) der Lauffläche (250) zu 90 % bis 100 % die erste Kautschukverbindung und zu 0 % bis 10 % die zweite Kautschukverbindung sind, und/oder wobei mindestens einer oder alle der Laufflächenblöcke oder Laufflächenrippen (410) zu 90 % bis 100 % die erste Kautschukverbindung und zu 10 % bis 0 % die zweite Kautschukverbindung sind.

7. Verfahren nach mindestens einem der vorstehenden Ansprüche, wobei das Verhältnis der ersten Verbindung zu der zweiten Verbindung in dem koextrudierten Streifen (210) durch Ändern des Verhältnisses der Geschwindigkeit einer ersten Zahnradpumpe (42) zu einer zweiten Zahnradpumpe (44) variiert wird.

8. Verfahren nach mindestens einem der vorstehenden Ansprüche, wobei die Lauffläche (250) eine oder mehrere Laufflächenrillen aufweist, wobei die Wände und/oder die Böden mindestens einer der Laufflächenrillen, vorzugsweise aller der Laufflächenrillen, aus einer Schicht von mindestens zu 90 % oder zu 100 % die zweite Kautschukverbindung ausgebildet werden.

9. Reifen, der eine Lauffläche aufweist, wobei die Lauffläche (250) durch ein vorzugsweise kontinuierliches spiralförmiges Wickeln eines koextrudierten Doppelschichtstreifens (210) aus einer ersten und einer zweiten Kautschukverbindung ausgebildet ist, wobei die erste Kautschukverbindung eine Laufflächenkautschukverbindung ist, vorzugsweise umfassend Siliciumdioxid und wobei sich die zweite Kautschukverbindung von der ersten Kautschukverbindung unterscheidet, wobei die Lauffläche (250) eine erste Seitenkante (255) aufweist, die durch spiralförmiges Wickeln des koextrudierten Doppelschichtstreifens (210) ausgebildet wird, der zu 90 % bis 100 %, vorzugsweise zu 90 % bis 99 % die erste Kautschukverbindung und zu 0 % bis 10 %, vorzugsweise zu 1 % bis 10 % die zweite Kautschukverbindung aufweist, und wobei die Lauffläche (250) eine zweite Seitenkante (257) aufweist, die durch spiralförmiges Wickeln des koextrudierten Doppelschichtstreifens (210) ausgebildet wird, der zu 30 % bis 70 %, vorzugsweise zu 40 % bis 60 % die erste Kautschukverbindung und zu 70 % bis 30 %, vorzugsweise zu 60 % bis 40 % die zweite Kautschukverbindung aufweist, **dadurch gekennzeichnet, dass** die zweite Kautschukverbindung einen Speichermodul G' aufweist, der, wenn er bei 1 % Dehnung und 100 °C gemäß ASTM D5289 in einem Bereich von 15 bis 60 MPa gemessen wird, und dass der Speichermodul G', wenn er bei 1 % Dehnung und 100 °C gemäß ASTM D5289 der zweiten Kautschukverbindung gemessen wird, mindestens 5 MPa höher als der jeweilige Speichermodul G' der ersten Kautschukverbindung ist.

10. Reifen nach Anspruch 9, wobei die Abnutzung der zweiten Kautschukverbindung, wenn sie gemäß ASTM D5963-2015 gemessen wird, mindestens 20 % höher als die Abnutzung der ersten Kautschukverbindung ist.

11. Reifen nach Anspruch 9, wobei die Abnutzung der zweiten Kautschukverbindung, wenn sie gemäß ASTM D5963-2015 gemessen wird, mindestens 40 % höher als die Abnutzung der ersten Kautschukverbindung ist.

12. Reifen nach Anspruch 9, wobei die zweite Kautschukverbindung einen Speichermodul G' aufweist, der, wenn er bei 1 % Dehnung und 100 °C gemäß ASTM D5289 in einem Bereich von 23 bis 50 MPa gemessen wird, und dass der Speichermodul G', wenn er bei 1 % Dehnung und 100°C gemäß ASTM D5289 der zweiten Kautschukverbindung gemessen wird, mindestens 10 MPa höher als der jeweilige Speichermodul G' der ersten Kautschukverbindung ist.

13. Reifen nach Anspruch 9, wobei die Lauffläche (250) eine erste Rippe oder einen ersten Laufflächenblock (410, 430, 440), der zu 90 % bis 100 % aus der ersten Kautschukverbindung ausgebildet wird, und eine zweite Rippe oder einen zweiten Laufflächenblock (410, 430, 440) aufweist, der aus einem Gradienten der ersten Kautschukverbindung zu der zweiten Kautschukverbindung ausgebildet wird oder umfassend einen Gradienten der ersten Kautschukverbindung zu der zweiten Kautschukverbindung, wenn er sich axial über die zweite Rippe oder einen zweiten Laufflächenblock (410, 430, 440) bewegt.

14. Reifen nach mindestens einem der Ansprüche 9 bis 13, wobei der koextrudierten Doppelschichtstreifen (210) aus der ersten und der zweiten Kautschukverbindung aus einer ersten Schicht (212) aus der ersten Kautschukverbindung und einer zweiten Schicht (214) der zweiten Kautschukverbindung besteht, und wobei die zweite Schicht (214) eine Stärke oder Dicke aufweist, die dünner als die Stärke oder Dicke der ersten Schicht (212) ist.

15. Reifen nach mindestens einem der Ansprüche 9 bis 14, wobei der koextrudierten Doppelschichtstreifen (210) eine rechteckige Querschnittsform oder eine trapezförmige Querschnittsform oder eine elliptische Querschnittsform aufweist.

## Revendications

1. Procédé destiné à la confection d'une bande de roulement composite pour un bandage pneumatique, le procédé comprenant les étapes dans lesquelles :
on confectionne une bande coextrudée (210) qui est constituée par un premier et un deuxième composé à base de caoutchouc, dans lequel le premier composé à base de caoutchouc représente un composé à base de caoutchouc pour une bande de roulement et le deuxième composé à base de caoutchouc est différent du premier composé à base de caoutchouc ; et
on confectionne la bande de roulement (250) à partir d'un enroulement de la bande coextrudée (210) sur un tambour de confection de bandage pneumatique (18) ou sur une carcasse de bande de roulement non vulcanisée alors que l'on fait varier le rapport existant entre le premier composé et le deuxième composé dans la bande coextrudée (210) ;
**caractérisé en ce que** le deuxième composé à base de caoutchouc possède un module de stockage G', lorsqu'on le mesure à une déformation de 1 % et à une température de 100 °C en conformité avec la norme ASTM D5289, dans une plage allant de 15 à 60 MPa et **en ce que** ledit module de stockage G', lorsqu'on le mesure à une déformation de 1 % et à une température de 100 °C en conformité avec la norme ASTM D5289, du deuxième composé à base de caoutchouc est supérieur à concurrence d'au moins 5 MPa au module de stockage respectif G' de la première composition à base de caoutchouc.

2. Procédé selon la revendication 1, dans lequel l'usure du deuxième composé à base de caoutchouc, lorsqu'on la mesure en conformité avec la norme ASTM D5963-2015, est supérieure à concurrence d'au moins 20 % à l'usure du premier composé à base de caoutchouc.

3. Procédé selon la revendication 1, dans lequel l'usure du deuxième composé à base de caoutchouc, lorsqu'on la mesure en conformité avec la norme ASTM D5963-2015, est supérieure à concurrence d'au moins 40 % à l'usure du premier composé à base de caoutchouc.

4. Procédé selon la revendication 1, dans lequel le deuxième composé à base de caoutchouc possède un module de stockage G', lorsqu'on le mesure à une déformation de 1 % et à une température de 100 °C en conformité avec la norme ASTM D5289, dans une plage allant de 23 à 50 MPa et en ce que ledit module de stockage G', lorsqu'on le mesure à une déformation de 1 % et à une température de 100 °C en conformité avec la norme ASTM D5289, du deuxième composé à base de caoutchouc est supérieur à concurrence d'au moins 10 MPa au module de stockage respectif G' de la première composition à base de caoutchouc.

5. Procédé selon la revendication 1, dans lequel la bande de roulement (250) possède deux bords latéraux de bande de roulement (255, 257) ; et dans lequel au moins un des bords latéraux (255, 257) ou les deux, de la bande de roulement (250) représente(nt) de 90 % à 100 % du premier composé à base de caoutchouc.

6. Procédé conformément à au moins une des revendications précédentes, dans lequel la bande de roulement (250) possède deux bords latéraux de bande de roulement (255, 257) ainsi qu'un ou plusieurs pavés de gomme ou nervures de bande de roulement (410) ; dans lequel au moins un des bords latéraux (255, 257) ou les deux, de la bande de roulement (250) représente(nt) de 90 % à 100 % du premier composé à base de caoutchouc et de 0 % à 10 % du deuxième composé à base de caoutchouc et/ou dans lequel au moins un pavé de gomme ou une nervure de bande de roulement (410) ou bien la totalité desdits pavés ou desdites nervures représente(nt) de 90 % à 100 % du premier composé à base de caoutchouc et de 10 % à 0 % du deuxième composé à base de caoutchouc.

7. Procédé conformément à au moins une des revendications précédentes, dans lequel on fait varier le rapport existant entre le premier composé et le deuxième composé dans la bande coextrudée (210) par l'intermédiaire d'une modification du rapport existant entre la vitesse d'une première pompe à engrenages (42) et la vitesse d'une deuxième pompe à engrenages (44).

8. Procédé conformément à au moins une des revendications précédentes, dans lequel la bande de roulement (250) possède une ou plusieurs rainures de bande de roulement ; dans lequel les parois et/ou les bases d'au moins une des rainures de la bande de roulement, de préférence de la totalité des rainures de la bande de roulement, est/sont réalisée(s) à partir d'une couche qui représente au moins 90 % ou 100 % du deuxième composé à base de caoutchouc.

9. Bandage pneumatique qui possède une bande de roulement, dans lequel la bande de roulement (250) est réalisée à partir d'un enroulement en spirale, de préférence en continu, d'une bande coextrudée (210) qui comprend deux couches, constituée par un premier composé et par un deuxième composé à base de caoutchouc ; dans lequel le premier composé à base de caoutchouc représente un composé à base de caoutchouc pour une bande de roulement qui comprend de préférence de la silice ; et dans lequel le deuxième composé à base de caoutchouc est différent du premier composé à base de caoutchouc ; dans lequel la bande de roulement (250) possède un premier bord latéral (255) que l'on obtient par l'intermédiaire d'un enroulement en spirale de ladite bande coextrudée (210) qui comprend deux couches, qui possède de 90 % à 100 %, de préférence de 90 % à 99 % du premier composé à base de caoutchouc et de 0 % à 10 %, de préférence de 1 % à 10 % du deuxième composé à base de caoutchouc ; et dans lequel la bande de roulement (250) possède un deuxième bord latéral (257) que l'on obtient par l'intermédiaire d'un enroulement en spirale de ladite bande coextrudée (210) qui comprend deux couches, qui possède de 30 % à 70 %, de préférence de 40 % à 60 % du premier composé à base de caoutchouc et de 70 % à 30 %, de préférence de 60 % à 40 % du deuxième composé à base de caoutchouc ; **caractérisé en ce que** le deuxième composé à base de caoutchouc possède un module de stockage G', lorsqu'on le mesure à une déformation de 1 % et à une température de 100 °C en conformité avec la norme ASTM D5289, dans une plage allant de 15 à 60 MPa et **en ce que** ledit module de stockage G', lorsqu'on le mesure à une déformation de 1 % et à une température de 100 °C en conformité avec la norme ASTM D5289, du deuxième composé à base de caoutchouc est supérieur à concurrence d'au moins 5 MPa au module de stockage respectif G' de la première composition à base de caoutchouc.

10. Bandage pneumatique selon la revendication 9, dans lequel l'usure du deuxième composé à base de caoutchouc, lorsqu'on la mesure en conformité avec la norme ASTM D5963-2015, est supérieure à concurrence d'au moins 20 % à l'usure du premier composé à base de caoutchouc.

11. Bandage pneumatique selon la revendication 9, dans lequel l'usure du deuxième composé à base de caoutchouc, lorsqu'on la mesure en conformité avec la norme ASTM D5963-2015, est supérieure à concurrence d'au moins 40 % à l'usure du premier composé à base de caoutchouc.

12. Bandage pneumatique selon la revendication 9, dans lequel le deuxième composé à base de caoutchouc possède un module de stockage G', lorsqu'on le mesure à une déformation de 1 % et à une température de 100 °C en conformité avec la norme ASTM D5289, dans une plage allant de 23 à 50 MPa et en ce que ledit module de stockage G', lorsqu'on le mesure à une déformation de 1 % et à une température de 100 °C en conformité avec la norme ASTM D5289, du deuxième composé à base de caoutchouc est supérieur à concurrence d'au moins 10 MPa au module de stockage respectif G' de la première composition à base de caoutchouc.

13. Bandage pneumatique selon la revendication 9, dans lequel la bande de roulement (250) possède une première nervure ou un premier pavé de gomme (410, 430, 440) qui est réalisée à partir de 90 % à 100 % du premier composé à base de caoutchouc, et une deuxième nervure ou un deuxième pavé de gomme (410, 430, 440) que l'on obtient à partir d'un gradient formé par le premier composé à base de caoutchouc par rapport au deuxième composé à base de caoutchouc, ou qui comprend un gradient formé par le premier composé à base de caoutchouc par rapport au deuxième composé à base de caoutchouc au cours d'un déplacement en direction axiale lors de son passage par la deuxième nervure ou le deuxième pavé de gomme (410, 430, 440).

14. Bandage pneumatique selon au moins une des revendications 9 à 13, dans lequel la bande coextrudée (210) qui comprend deux couches, du premier composé et du deuxième composé à base de caoutchouc est constituée par une première couche (212) du premier composé à base de caoutchouc et par une deuxième couche (214) du deuxième composé à base de caoutchouc ; et dans lequel la deuxième couche (214) possède un calibre ou une épaisseur qui est inférieur au calibre ou à l'épaisseur de la première couche (212).

15. Bandage pneumatique selon au moins une des revendications 9 à 14, dans lequel la bande coextrudée (210) qui comprend deux couches possède une configuration de forme rectangulaire en section transversale ou une configuration de forme trapézoïdale en section transversale ou une configuration de forme elliptique en section transversale.
